# EUROPÄISCHE PATENTSCHRIFT

(11) **EP 1 780 103 B1**
(45) Veröffentlichungstag und Bekanntmachung des Hinweises auf die Patenterteilung: **13.04.2011**
(21) Anmeldenummer: 06019737.3
(22) Anmeldetag: 21.09.2006
(51) Int. Cl.: B62D 25/20, B60R 21/13

(54) **Vorrichtung zur Aufnahme von Seitenkräften bei einem Seitenaufprall eines Kraftfahrzeugs**
Device for absorbing lateral forces in a motor vehicle caused by a side impact collision
Dispositif pour absorber des forces latérales engendrées par une collision latérale dans un véhicule automobile

(30) Priorität: 29.10.2005 DE 102005051948
(43) Veröffentlichungstag der Anmeldung: 02.05.2007
(73) Patentinhaber: Dr. Ing. h.c. F. Porsche AG, 70435 Stuttgart (DE)
(72) Erfinder: Brunner, Markus, 72124 Pliezhausen (DE); Brausse, Stephan, 72800 Eningen (DE); Praznik, Franc, 71229 Leonberg (DE); Oggianu, Roberto, 71229 Leonberg (DE)

(56) Entgegenhaltungen:
- EP-B1- 0 943 530
- WO-A-00/61424
- DE-A1-102004 012 500
- GB-A- 1 060 864
- GB-A- 2 262 917
- US-A- 5 388 885
- US-A- 6 053 567
- US-A1- 2002 180 244

## Beschreibung

Die Erfindung bezieht sich auf eine Anordnung zur Aufnahme von Seitenkräften bei einem Seitenaufprall eines Kraftfahrzeugs nach dem Oberbegriff des Anspruchs 1. Das Dokument WO 00/61424 A offenbart eine solche Anordnung.

Aus der EP 0 943 530 B1 ist ein Fahrzeug mit einer Vorrichtung zur Aufnahme von Seitenkräften bei einem Seitenaufprall über eine querversteifende Baueinheit bekannt. Diese besteht aus einer Rohrkonstruktion mit zwei seitlich außenliegenden, aufrechten Verstärkungsrohren und einem sich über die Karosseriebreite erstreckenden, rohrförmigen Versteifungselement. Die aufrechten Versteifungsrohre sind mit Knotenblechen verbunden, die in den Fahrzeugaufbau eingebunden sind.

Aufgabe der Erfindung ist es, eine Anordnung in einem Kraftfahrzeug für einen Seitenaufprallschutz bzw. für die Aufnahme von Seitenkräften zu schaffen, welche eine optimale Aufnahme dieser Seitenkräfte gewährleistet und eine einfache Montage ermöglicht, wobei eine gezielte Krafteinleitung in den Fahrzeugaufbau ermöglicht wird und ein optimaler Insassenschutz erzielbar ist.

Diese Aufgabe wird erfindungsgemäß durch die Merkmale des Anspruchs 1 gelöst. Weitere vorteilhafte Merkmale beinhalten die Unteransprüche.

Mit der erfindungsgemäßen Anordnung wird hauptsächlich bei einem Seitenaufprall bzw. bei seitlich auf ein Fahrzeug auftreffende Kräfte im Bereich einer B-Säule oder einem hinter einem Türausschnitt befindlichen Karosseriebereich, erreicht, dass das Fahrzeug in diesem Bereich zusätzlich verstärkt wird, damit die Insassen bei einem Crash oder dgl. geschützt werden und dieser Karosseriebereich nicht soweit nach innen verformt werden kann, dass Insassen verletzt werden. Dieses wird nach der Erfindung erreicht, indem das Stützelement aus einem vom querverlaufenden Trägerelement in einer vertikalen Ebene nach oben vorragenden Profilteil besteht, das am Trägerelement über zugerichtete erste Befestigungsabschnitte befestigt ist und mit zweiten Befestigungsabschnitten das Profilteil mit einem am Fahrzeugaufbau gehaltenen innenliegenden Anschlussteil verbunden ist. Es ist nach der Erfindung vorgesehen, dass das Profilteil kastenförmig ausgebildet ist und aus zwei über einen Verbindungssteg verbundenen Seitenwangen besteht, die beabstandet gegenüberstehend sind und die ersten Befestigungsabschnitte horizontal verlaufend jeweils an den Seitenwangen angeordnet sind und zwischen sich das Trägerelement aufnehmen. Durch diese Ausbildung des Profilteils können Seitenaufprallkräfte optimal auf das querverlaufende Trägerelement übertragen werden, das als Rohr ausgeführt ist.

Eine Befestigung des Profilteils sowohl am querverlaufenden Trägerelement als auch am Fahrzeugaufbau erfolgt über relativ lange Befestigungsabschnitte, damit ein Abreißen verhindert wird. Es ist nach der Erfindung vorgesehen, dass das Profilteil an seinen Seitenwangen in einer vertikalen Ebene die zweiten Befestigungsabschnitte aufweist, welche von den Seitenwangen als abgestellte Schenkel ausgeführt sind und die mit dem Anschlussteil des Fahrzeugaufbaus fest verbunden sind, das sich in Fahrzeuglängsrichtung erstreckt.

Das Profilteil ist mit seinen ersten Befestigungsabschnitten an einer Wandung des Trägerteils befestigt und eine untere Begrenzung der Befestigungsabschnitte ist zumindestens im Bereich zwischen einer unteren Begrenzungsebene und einer darüber angeordneten oberen Begrenzungsebene des Trägerteils angeordnet. Damit das Profilteil nicht zum Trägerelement nach unten vorstehend ist und sich hierdurch evtl. ungünstig auf das querverlaufende Trägerelement auswirkende Verformung ergeben, ist speziell vorgesehen, dass das Profilteil mit seinen ersten horizontal verlaufenden Befestigungsabschnitten am Endrohrabschnitt mindestens in einer Rohrmittenquerebene oder darunter befestigt ist, wobei die Stirnkanten des Profilteils über die Rohrmittenquerebene hinausgeführt sind und vor einer unteren Rohrquerebene enden, welche das Rohr bzw. das Trägerelement nach unten hin begrenzt. Hierdurch wird erreicht, dass sich unterhalb des Trägerelements kein Bereich des Profilteils erstreckt und sichergestellt ist, dass sich über das hocherstreckende Profilteil nur nach oben hin ein Hebelarm ergibt und sich das Trägerelement entsprechend unter Energieaufnahme verformt und ein Überlebensraum bis zu einer gewissen Höhe der Seitenkraft sichergestellt ist.

Das Trägerelement besteht aus einem querverlaufenden Rohr und jeweils ein End-Rohrabschnitt jeder Fahrzeugseite ist mit dem Profilteil verbunden und ein weiterer anschließender querverlaufender Mittenrohrabschnitt ist über eine Schiebehülse jeweils mit dem Endrohrabschnitt verbunden. Das Rohr des Trägerelements kann im Querschnitt polygonal, rund, ellipsenförmig oder dgl. ausgeführt sein. Das Trägerelement kann auch in die Bodengruppe des Fahrzeugaufbaus als Träger integriert oder aber als geschweißter oder genieteter Träger aufgesetzt sein.

Damit beim vorgeschriebenen Test zum Seitenaufprall die Seitenkräfte optimal aufgenommen werden, ist nach der Erfindung des Weiteren vorgesehen, dass das mit dem Anschlussteil des Fahrzeugaufbaus fest verbundene Profilteil oberhalb eines Fahrzeugschwellers und beabstandet zu einer Seitenaußenwand des Fahrzeugaufbaus angeordnet ist und das Anschlussteil einerseits an einem einen Schweller bildenden Blechformteil und andererseits an einer Innenwandung des Fahrzeugsaufbaus angebunden ist.

Zur Anpassung an ein Fahrzeug mit Mitteltunnel ist nach der Erfindung vorgesehen, dass der Mittenrohrabschnitt einen Mitteltunnel des Fahrzeugaufbaus übergreifenden trapezförmigen Bereich aufweist und die anschließenden sich quer erstreckenden Rohrabschnitte tiefergelegen sind und koaxial zu den Endrohrabschnitten verlaufen. Bei einer aufzunehmenden Seitenkraft können sich die quererstreckenden Rohrabschnitte bzw. Trägerelementeabschnitte über den trapezförmigen Bereich teilweise am Mitteltunnel abstützen, damit das querverlaufende Trägerelement nicht mit einem Profilteil zur anderen Seite des Fahrzeugs durchschlägt.

Ein Ausführungsbeispiel der Erfindung ist in den Zeichnungen dargestellt und wird im Folgenden näher beschrieben.

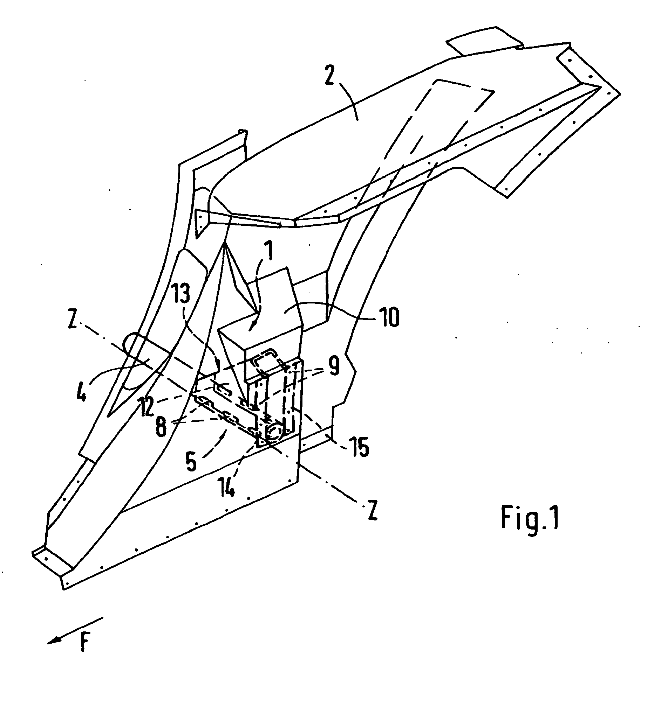

Es zeigen
- Fig. 1: eine schaubildliche Darstellung einer Vorrichtung mit Trägerelement und Profilteil im Fahrzeugaufbau (teilweise von außen her auf das Fahrzeug gesehen),
- Fig. 2: einen Vertikalschnitt durch die Vorrichtung,
- Fig. 3: eine schaubildliche Gesamtansicht der Vorrichtung mit querverlaufendem Trägerelement und endseitigen Profilteilen,

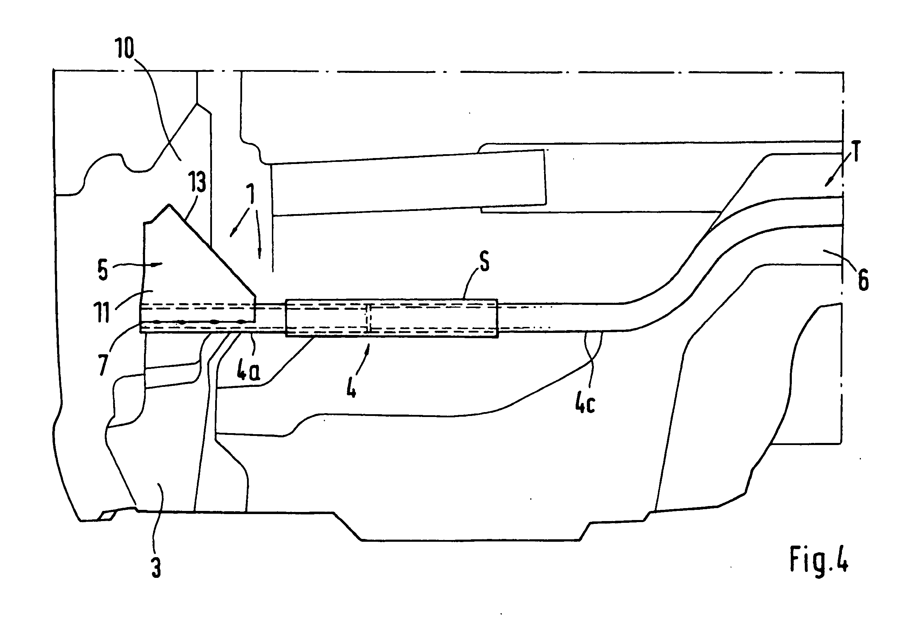

- Fig. 4: eine vergrößerte Darstellung eines Endes der Vorrichtung mit Schiebehülse,
- Fig. 5: einen Schnitt durch das Profilteil gem. Linie V-V der Fig. 6
- Fig. 6: eine Vorderansicht in Richtung Z auf das Profilteil gesehen,
- Fig. 7: eine Draufsicht auf das Profilteil und
- Fig. 8: eine schaubildliche Darstellung des mit dem Trägerelements verbundenen Profilteils.

Eine Vorrichtung 1 zur Aufnahme von Seitenaufprallkräften in Pfeilrichtungen A (Kraftrichtung ist nur symbolisch dargestellt) umfasst im Wesentlichen im Fahrzeugaufbau 2 ein quer im Fahrzeug 3 verlaufendes Trägerelement 4 und ein mit diesem verbundenes Profilteil 5, das jeweils endseitig des Trägerelements 4 befestigt ist. Das Trägerelement 4 kann am Fahrzeugboden befestigt sein und einen den Boden angepassten Verlauf, insbesondere über einen Mitteltunnel 6 hinweg aufweisen, wozu das Trägerelement 4 korrespondierend zu diesem einen entsprechenden Verlauf mit einem trapezförmigen Übersprung T aufweist.

Die Vorrichtung 1 ist in der Weise ausgelegt, dass bei einem Seitenaufprall mit einer vorgegebenen Kraft ein Überlebensraum für die Insassen verbleibt. Das heißt, die Vorrichtung 1 ist vorzugsweise im Bereich einer B-Säule bzw. in einem entsprechenden Kraftfahrzeugbereich angeordnet, welcher nicht unbedingt eine ausgeprägte B-Säule aufweisen muss.

Das Trägerelement 4 ist in dem dargestellten Beispiel aus einem Rohr runden Querschnitts bestehend. Denkbar sind auch Trägerelemente 4 aus Rohren polygonaler Form oder anderen geometrischen Querschnitten, wie beispielsweise ellipsenförmig oder dgl.. Auch kann das Trägerelement 4 aus Blechteilen zusammengesetzt sein, die einen Blechträger ergeben, der aus einem offenen oder geschlossenen Profil bestehen kann. Auch sind nach der Erfindung energieaufnehmende Wellrohre und dgl. möglich.

Das Profilteil 5 der Vorrichtung 1 besteht aus einem vom querverlaufenden Trägerelement 4 in einer vertikalen Ebene nur nach oben vorragenden sogenannten Stützelement, welches jeweils mit einem freien Ende 7 des Trägerelements 4 abschließt. Über erste und zweite Befestigungsabschnitte 8 und 9 am Profilteil 5 erfolgt über den ersten Befestigungsabschnitt 8 eine Verbindung mit dem Trägerelement 4 und über den zweiten Befestigungsabschnitt 9 eine Verbindung mit einem Anschlussteil 10 des Fahrzeugaufbaus 2 des Fahrzeugs 1, welches hauptsächlich zur Positionierung der Vorrichtung 1 im Fahrzeug dient und Teil einer B-Säule sein kann.

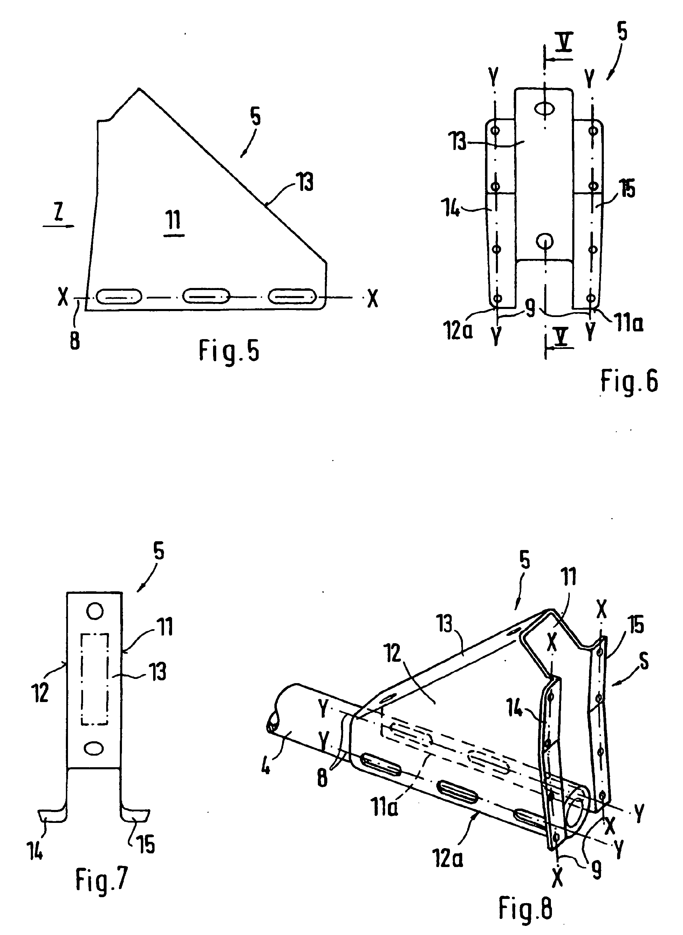

Das Profilteil 5 ist etwa kastenförmig ausgeführt und umfasst zwei zueinander beabstandete Seitenwangen 11 und 12, die kopfseitig über einen Steg 13 miteinander verbunden sind. Das Profilteil 5 ist von der Seite her gesehen dreieckförmig ausgeführt, wobei der Steg 13 schräg verlaufend ausgeführt ist und zum Trägerelement 4 hin auslaufend ist, wie auch in Fig. 8 näher gezeigt wird.

Die Seitenwangen 11, 12 des Profilteils 5 umgreifen das Trägerelement 4 peripher von außen, wie in dem gezeigten Ausführungsbeispiel mit einem Rohr dargestellt ist und die Seitenwangen 11, 12 sind über die in einer horizontalen Ebene Y-Y verlaufenden ersten Befestigungsabschnitte 8 durch Schweißung oder dgl. Verfahren mit dem Rohr 4 verbunden. An einer Stirnseite des Profilteils 5 sind die zweiten Befestigungsabschnitte 9 in einer vertikalen Ebene X-X vorgesehen, die aus von den Seitenwangen 11, 12 abgestellten Schenkeln 14, 15 bestehen, welche fest mit dem Anschlussteil 10 des Fahrzeugaufbaus 2 verbunden sind. Das Anschlussteil 10 ist als in Fahrzeuglängsrichtung ausgerichtetes Blechteil ausgeführt und in Querrichtung des Fahrzeugs beabstandet zur Außenseitenwand 16 des Fahrzeugs 3 angeordnet.

Die Seitenwangen 11, 12 enden mit ihren unteren Kanten 11a, 12a entweder vor oder in einer unteren Begrenzungsebene Z-Z des Trägerelements 4 bzw. des Rohres oder darüber.

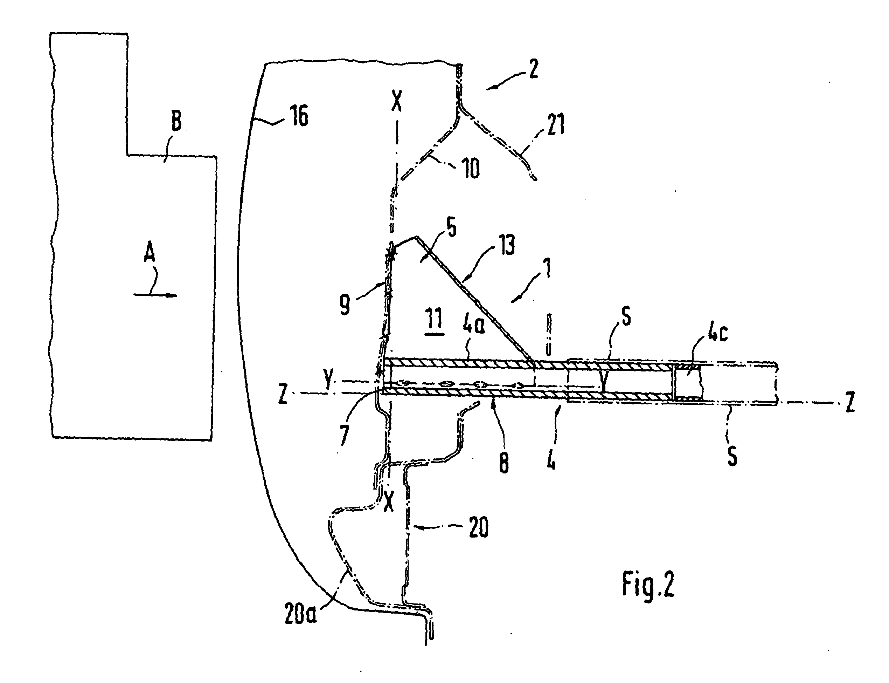

Die beiden Befestigungsabschnitte 8 und 9 sind etwa rechtwinkelig zueinander angeordnet, so dass eine optimale Kraftaufnahme bei einem Seitenaufprall erfolgen kann. In Fig. 2 ist eine Barriere B angedeutet, mit der ein Seitenaufprall auf das Fahrzeug 3 simuliert wird.

Im gezeigten Ausführungsbeispiel ist das als Rohr ausgebildete Trägerelement 4 zur Montage unterteilt ausgeführt. So sind End-Rohrabschnitte 4a und 4b an jeder Fahrzeugseite mit dem Profilteil 5 verbunden. Ein Mittenrohrabschnitt 4c der Vorrichtung 1 wird mit den Endrohr-Abschnitten 4a, 4b jeweils über eine Schiebehülse S fest verbunden. Diese wird nach der Montage eines Seitenteils des Fahrzeugs an den übrigen Fahrzeugaufbau über die End-Rohrabschnitte 4a, 4b geschoben und danach verschweißt.

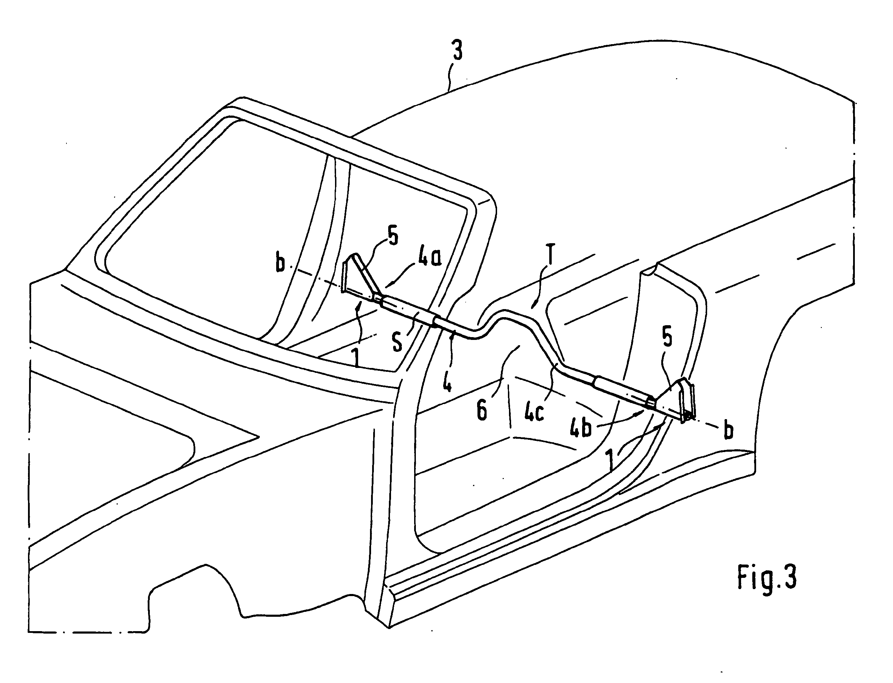

Wie in den Fig. 2 und 3 näher dargestellt, ist die Vorrichtung 1 mit dem Profilteil 5 sowie dem Trägerelement 4 oberhalb eines Schwellers 20 des Fahrzeugs angeordnet, wobei das Anschlussteil 10 am Schweller 20 sowie an einer Innenwandung 21 des Fahrzeugaufbaus gehalten ist. Der Mittenrohrabschnitt 4c übergreift den Mitteltunnel des Fahrzeugaufbaus 2 und ist in diesem Bereich etwa trapezförmig ausgeführt und die anschließenden Bereiche der Rohrabschnitte, insbesondere 4a und 4b sowie Bereiche des Mittenrohrabschnitts 4c sind tiefergelegen und koaxial zu den Endrohrabschnitten 4a und 4b verlaufend angeordnet.

## Patentansprüche

1. Anordnung zur Aufnahme von Seitenkräften bei einem Seitenaufprall eines Kraftfahrzeugs, wozu in Querrichtung des Fahrzeugs im Fahrzeugaufbau eine querversteifende Baueinheit angeordnet ist, die aus einem querverlaufenden Trägerelement und jeweils einem endseitig verbundenen Stützelement besteht, das im Bereich der B-Säule oder einem entsprechenden Karosseriebereich angeordnet ist, wobei das Stützelement aus einem vom querverlaufenden Trägerelement (4) in einer vertikalen Ebene nach oben vorragendem Profilteil (5) besteht, welches erste horizontale und zweite vertikale Befestigungsabschnitte (8, 9) umfasst , und das Profilteil (5) am Trägerelement (4) über die zugerichteten ersten horizontalen Befestigungsabschnitte (8) befestigt ist, wobei das Profilteil (5) etwa kastenförmig ausgeführt ist und aus zwei über einen verbindenden Steg (13) verbundenen Seitenwangen (11, 12) besteht, die beabstandet gegenüberstehend sind und die ersten in einer horizontalen Ebene (Y-Y) angeordneten Befestigungsabschnitte (8) jeweils an den Seitenwangen (11, 12) angeordnet sind, **dadurch gekennzeichnet, dass** das Profilteil (5) zwischen den Seitenwangen (11, 12) das Trägerelement (4) haltend aufnimmt und über die zweiten vertikalen Befestigungsabschnitte (9) mit einem am Fahrzeugaufbau (2) gehaltenen innenliegenden Anschlussteil (10) verbindbar ist und dass das Trägerelement (4) aus einem Rohr besteht und jeweils ein End-Rohrabschnitt (4a, 4b) jeder Fahrzeugseite mit dem Profilteil (5) verbunden ist und ein weiterer anschließender querverlaufender Mitten-Rohrabschnitt (4c) über eine Schiebehülse (S) mit den End-Rohrabschnitten (4a, 4b) verbunden ist.

2. Anordnung nach Anspruch 1, **dadurch gekennzeichnet, dass** das Profilteil (5) an seinen Seitenwangen (11, 12) in einer vertikalen Ebene (X-X) die zweiten Befestigungsabschnitte (9) aufweist, welche von den Seitenwangen (11, 12) als abgestellte Schenkel (14, 15) ausgeführt sind und die mit dem Anschlussteil (10) des Fahrzeugaufbaus (2) verbunden sind, das sich in Fahrzeuglängsrichtung erstreckt.

3. Anordnung nach den Ansprüchen 1 oder 2, **dadurch gekennzeichnet, dass** das Profilteil (5) mit seinen ersten Befestigungsabschnitten (8) an Wandungen des Trägerteils (4) befestigt ist und eine untere Begrenzung der Befestigungsabschnitte (8) zumindest im Bereich zwischen einer unteren Begrenzungsebene (Z-Z) und einer darüber angeordneten oberen Begrenzungsebene des Trägerteils (4) angeordnet ist.

4. Anordnung nach den Ansprüchen 1, 2 oder 3, **dadurch gekennzeichnet, dass** das Profilteil (5) als Blechformteil ausgeführt und im Querschnitt U-profilförmig ausgebildet ist und die ersten Befestigungsabschnitte (8) zu den zweiten Befestigungsabschnitten (9) etwa im rechten Winkel zueinander stehen und der verbindende Steg (13) zwischen beiden Seitenwangen (11, 12) mit einem spitzen Winkel zu den anschließenden ersten Befestigungsabschnitten (8) verläuft.

5. Anordnung nach einem der vorhergehenden Ansprüche, **dadurch gekennzeichnet, dass** das Profilteil (5) mit seinen ersten horizontal verlaufenden Befestigungsabschnitten (8) am End-Rohrabschnitt (4a) mindestens in oder nahe einer Rohrmittenquerebene befestigt ist, wobei die Stirnkanten (11a, 12a) des Profilteils (5) über die Rohrmittenquerebene hinausgeführt sind und vor einer unteren Rohrquerebene (Z-Z) enden.

6. Anordnung nach einem der vorhergehenden Ansprüche, **dadurch gekennzeichnet, dass** mit dem Anschlussteil (10) des Fahrzeugaufbaus (2) die verbundenen Profilteile (5) jeweils oberhalb eines Fahrzeugschwellers (20) und beabstandet zu einer Seitenaußenwand (16) des Fahrzeugaufbaus (2) gehalten sind.

7. Anordnung nach einem der vorhergehenden Ansprüche, **dadurch gekennzeichnet, dass** das Anschlussteil (10) einerseits an einem einen Schweller (20) mitbildenden Blechformteil (20a) und andererseits an einer Innenwandung (21) des Fahrzeugaufbaus (2) angebunden ist.

8. Anordnung nach einem der vorhergehenden Ansprüche, **dadurch gekennzeichnet, dass** der Mitten-Rohrabschnitt (4c) einen einen Mitteltunnel (6) des Fahrzeugaufbaus (2) übergreifenden trapezförmigen Bereich (T) aufweist und die anschließenden sich quer erstreckenden Rohrabschnitte (4a, 4b) sowie die sich an den trapezförmigen Bereich (T) anschließenden Rohrabschnitte tiefergelegen in einer Ebene (b-b) angeordnet sind und koaxial zu den End-Rohrabschnitten (4a, 4b) verlaufen.

## Claims

1. Arrangement for absorbing lateral forces in the event of a side impact of a motor vehicle, for which a constructional unit which provides transverse reinforcement is arranged in the vehicle body in the transverse direction of the vehicle, said constructional unit consisting of a transversely extending carrier element and of a supporting element which is connected on the end side in each case and is arranged in the region of the B pillar or a corresponding bodywork region, wherein the supporting element consists of a profile part (5) which projects upwards in a vertical plane from the transversely extending carrier element (4), and comprises first horizontal and second vertical fastening portions (8, 9), and the profile part (5) is fastened to the carrier element (4) via the facing, first horizontal fastening portions (8), wherein the profile part (5) is of approximately box-shaped design and consists of two side members (11, 12) which are connected via a connecting web (13) and are opposite each other at a distance, and the first fastening portions (8) which are arranged in a horizontal plane (Y-Y), are each arranged on the side members (11, 12) **characterized in that** the profile part (5) receives the carrier element (4) between the side members (11, 12) in a retaining manner and can be connected via the second vertical fastening portions (9) to an inner connecting part (10) held on the vehicle body (2), and **in that** the carrier element (4) consists of a tube, and a respective end tube portion (4a, 4b) of each side of the vehicle is connected to the profile part (5), and a further, adjoining, transversely extending centre tube portion (4c) is connected to the end tube portions (4a, 4b) via a sliding sleeve (S).

2. Arrangement according to Claim 1, **characterized in that**, in a vertical plane (X-X) on the side members (11, 12) thereof, the profile part (5) has the second fastening portions (9) which are designed as legs (14, 15) bent from the side members (11, 12) and are connected to the connecting part (10) of the vehicle body (2), which connecting part extends in the longitudinal direction of the vehicle.

3. Arrangement according to Claim 1 or 2, **characterized in that** the profile part (5) is fastened by the first fastening portions (8) thereof to walls of the carrier part (4), and a lower boundary of the fastening portions (8) is arranged at least in the region between a lower boundary plane (Z-Z) and an upper boundary plane, which is arranged thereabove, of the carrier part (4).

4. Arrangement according to Claim 1, 2 or 3, **characterized in that** the profile part (5) is designed as a sheet-metal shaped part and is in the shape of a U profile in cross section, and the first fastening portions (8) are approximately at right angles to the second fastening portions (9), and the connecting web (13) between the two side members (11, 12) runs at an acute angle to the adjoining first fastening portions (8).

5. Arrangement according to one of the preceding claims, **characterized in that** the profile part (5) is fastened by the first horizontally extending fastening portions (8) thereof to the end tube portion (4a) at least in or in the vicinity of a tube centre transverse plane, the end edges (11a, 12a) of the profile part (5) being guided beyond the tube centre transverse plane and ending in front of a lower tube transverse plane (Z-Z).

6. Arrangement according to one of the preceding claims, **characterized in that**, with the connecting part (10) of the vehicle body (2), the connected profile parts (5) are each held above a vehicle sill (20) and at a distance from a side outer wall (16) of the vehicle body (2).

7. Arrangement according to one of the preceding claims, **characterized in that** the connecting part (10) is connected on one side to a sheet-metal shaped part (20a) which at the same time forms a sill (20) and on the other side to an inner wall (21) of the vehicle body (2).

8. Arrangement according to one of the preceding claims, **characterized in that** the centre tube portion (4c) has a trapezoidal region (T) overlapping a centre tunnel (6) of the vehicle body (2), and the adjoining, transversely extending tube portions (4a, 4b) and the tube portions adjoining the trapezoidal region (T) are arranged lower down in a plane (b-b) and run coaxially with respect to the end tube portions (4a, 4b).

## Revendications

1. Dispositif pour absorber des forces latérales engendrées par une collision latérale d'un véhicule automobile, pour lequel, dans la direction transversale du véhicule, une unité fonctionnelle de renforcement latéral est disposée dans la structure du véhicule, ladite unité se composant d'un élément de support s'étendant dans le plan transversal et respectivement d'un élément de soutien rattaché du côté d'extrémité qui est disposé dans la zone du montant B ou dans une zone de carrosserie correspondante, l'élément de soutien se composant d'une partie profilée (5) saillant vers le haut dans un plan vertical depuis l'élément de support (4) s'étendant dans le plan transversal, ladite partie comprenant des premiers et seconds segments de fixation (8, 9) horizontaux et verticaux et la partie profilée (5) étant fixée à l'élément de support (4) par le biais des premiers segments de fixation (8) horizontaux, la partie profilée (5) prenant quelque peu la forme d'un caisson et se composant de deux joues latérales (11, 12) reliées par un étai (13) de jonction, lesdites joues étant placées face à face à une certaine distance l'une de l'autre et les premiers segments de fixation (8) disposés dans un plan horizontal (Y-Y) étant respectivement disposés contre les joues latérales (11, 12), **caractérisé en ce que** la partie profilée (5) loge de façon bloquante l'élément de support (4) entre les joues latérales (11, 12) et peut être relié, par le biais des seconds segments de fixation (9) verticaux, à une partie de raccord (10) intérieure maintenue contre la structure du véhicule (2) et que l'élément de support (4) se compose d'un tube et que respectivement un segment de tube d'extrémité (4a, 4b) est relié, sur chaque côté du véhicule, à la partie profilée (5) et qu'un autre segment de tube central (4c) connexe s'étendant dans le plan transversal est relié aux segments de tube d'extrémité (4a, 4b) par le biais d'une douille coulissante (S).

2. Dispositif selon la revendication 1, **caractérisé en ce que** la partie profilée (5) contient, au niveau de ses joues latérales (11, 12), les seconds segments de fixation (9) dans un plan vertical (X-X), lesdits segments étant réalisés à partir des joues latérales (11, 12) sous la forme de côtés (14, 15) décalés et étant liés à la partie de raccord (10) de la structure du véhicule (2) s'étendant dans la direction longitudinale du véhicule.

3. Dispositif selon les revendications 1 ou 2, **caractérisé en ce que** la partie profilée (5) est fixée avec ses premiers segments de fixation (8) aux parois de la partie de support (4) et qu'une délimitation inférieure des segments de fixation (8) est disposée au moins dans la zone située entre un plan de délimitation inférieur (Z-Z) et un plan de délimitation supérieur de la partie de support (4), ledit plan de délimitation supérieur étant disposé au-dessus du plan de délimitation inférieur.

4. Dispositif selon les revendications 1, 2 ou 3, **caractérisé en ce que** la partie profilée (5) prend la forme d'une pièce moulée en tôle et prend une forme de profilé en U en section transversale et que les premiers segments de fixation (8) et les seconds segments de fixation (9) se positionnent approximativement à angle droit les uns par rapport aux autres et que l'étai de jonction (13) s'étend entre les deux joues latérales (11, 12) selon un angle aigu par rapport aux premiers segments de fixation (8) connexes.

5. Dispositif selon l'une quelconque des revendications précédentes, **caractérisé en ce que** la partie profilée (5) est fixée avec ses premiers segments de fixation (8) s'étendant horizontalement au niveau du segment de tube d'extrémité (4a) au moins dans un plan transversal de centre de tube ou à proximité de celui-ci, les arêtes frontales (11a, 12a) de la partie profilée (5) ressortant de façon guidée au-delà du plan transversal de centre de tube et s'étendant devant un plan transversal de tube (Z-Z) inférieur.

6. Dispositif selon l'une quelconque des revendications précédentes, **caractérisé en ce que** les parties profilées (5) rattachées sont respectivement maintenues au-dessus d'un bas de marche de véhicule (20) et à une certaine distance d'une paroi extérieure latérale (16) de la structure du véhicule (2) avec la partie de raccord (10) de la structure du véhicule (2).

7. Dispositif selon l'une quelconque des revendications précédentes, **caractérisé en ce que** la partie de raccord (10) est rattachée d'un côté à une pièce moulée en tôle (20a) formant conjointement un bas de marche (20) et de l'autre côté à une paroi intérieure (21) de la structure du véhicule (2).

8. Dispositif selon l'une quelconque des revendications précédentes, **caractérisé en ce que** le segment de tube central (4c) comporte une zone trapézoïdale (T) emboîtant un tunnel central (6) de la structure du véhicule (2) et les segments tubulaires (4a, 4b) raccordés s'étendant transversalement et les segments tubulaires raccordés dans la zone trapézoïdale (T) étant disposés en profondeur dans un plan (b-b) et s'étendant coaxialement par rapport aux segments de tube d'extrémité (4a, 4b).
